# EUROPEAN PATENT APPLICATION

(11) **EP 2 146 094 A2**
(43) Date of publication of application: **20.01.2010**
(21) Application number: 09164968.1
(22) Date of filing: 08.07.2009
(51) Int. Cl.: F03D 7/02

(54) **Apparatus and method for cooling a wind turbine hub**

(30) Priority: 17.07.2008 US 175157
(71) Applicant: General Electric Company, Schenectady, NY 12345 (US)
(72) Inventor: McCorkendale, Timothy E., Tehachapi, CA 93561-8157 (US)
(74) Representative: Bedford, Grant Richard

(57) **Abstract**

A rotor (108) for a wind turbine (100) is provided. The rotor (108) includes a hub (110) and at least one blade (112) coupled to the hub, at least one electric pitch motor operatively coupled to the at least one blade, and a pitch motor control system (130) operatively coupled to the at least one pitch motor, the pitch motor control system comprising a plurality of components (134) that produce excess heat during operation, the plurality of components mounted to an inside surface of the hub.

## Description

The field of the invention relates generally to wind turbines, and more particularly to a method and apparatus for cooling a wind turbine hub.

Typically, modem wind turbines have rotor blades with adjustable pitch angle. The rotor blades can be rotated about their longitudinal axis by means of a pitch drive disposed in the rotor hub. Typically, the pitch drive is actuated electrically or hydraulically. By adjusting the pitch angles of the rotor blades, the power generation of the wind turbine can be controlled as well as aerodynamic braking of the rotor can be accomplished. Particularly, the rotor blades generate a braking torque when moved into feather position. Therefore, the rotor blades ensure that the rotor is not further accelerated and, thus, the rotor blades form an aerodynamic brake for the wind turbine.

Heat generated by the pitch control components is conducted into the internal air volume of the hub causing the hub temperature to increase over time. The increased temperature may result in an over temperature condition of the control system components which may require a shutdown of the turbine to allow the hub air volume to cool. Also, operating the control components, especially the microprocessor based controller components, at or near their maximum allowed temperatures, greatly reduces the controller components' life. This may cause increased downtime for component replacement.

Currently heat is removed from the pitch control components by heat sinks which rely on conduction of the heat into the air volume inside the hub which increases the temperature of the air volume inside the hub. One known solution to this problem is to introduce cooler outside air into the hub by an air duct routed through a hole in the nose-cone and hub hatch which adds complexity and costs to the wind turbine. It would be desirable to have a method and apparatus to cool the pitch control components without raising the temperature of the air volume inside the hub and without adding complexity to the wind turbine.

In one aspect according to the present invention, a rotor for a wind turbine is provided. The rotor includes a hub and at least one blade coupled to the hub, at least one electric pitch motor operatively coupled to the at least one blade, and a pitch motor control system operatively coupled to the at least one pitch motor. The pitch motor control system includes a plurality of components that produce excess heat during operation. The plurality of components that produce excess heat during operation are mounted to an inside surface of the hub.

In another aspect, a wind turbine is provided. The wind turbine includes a wind rotor including a hub and at least one blade coupled to the hub, and at least one electric pitch motor operatively coupled to the at least one blade. The wind turbine also includes a pitch motor control system operatively coupled to the at least one pitch motor. The pitch motor control system includes a plurality of components that produce excess heat during operation. The plurality of components that produce excess heat during operation are mounted to an inside surface of the hub.

In another aspect, a method of cooling wind turbine components is provided. The method includes providing a wind rotor including a hub and a plurality of blades coupled to the hub, and providing at least one electric pitch motor operatively coupled to the plurality of blades. The at least one electric pitch motor includes a pitch motor control system operatively coupled to the at least one pitch motor. The pitch motor control system includes a plurality of components that produce excess heat during operation. The method also includes mounting the plurality of components to an inside surface of the hub so that the hub is a heat sink to remove excess heat from the plurality of components that produce excess heat during operation.

Various aspects and embodiments of the present invention will now be described in connection with the accompanying drawings, in which:
FIG. 1 is a side elevation view of an exemplary wind turbine.
FIG. 2 is a cut-away perspective view of a nacelle of the exemplary wind turbine configuration shown in FIG. 1.
FIG. 3 is a sectional view of a pitch motor control component mounted in an electrical isolation case.
FIG. 4 is a perspective view of a pitch motor control component mounted to the wind turbine hub.
FIG. 5 is a perspective view of another pitch motor control component mounted to the wind turbine hub.

A method and apparatus to cool the pitch control components of a wind turbine without appreciably raising the temperature of the air volume inside the hub and without adding complexity to the wind turbine is described below in detail. In an exemplary embodiment, the pitch control components that produce excess heat during operation are mounted to an inside surface of the hub of the wind turbine. By introducing excess heat produced by the pitch control components directly into the hub casting, the pitch control components are kept cool enough to last longer and not require shutdown of the turbines to facilitate cool down times because of over heating. The large mass of the hub acts as an excellent heat sink for the heat energy introduced into it by the pitch control components. Additionally the hub casting is cooled by airflow over the outside of the hub during operation. Even though higher winds require more pitch activity producing more heat, the higher winds also will cool the hub casting more efficiently. The method and apparatus described below greatly reduces the thermal resistance of the heat conduction path between the heat producing pitch control components and outside atmosphere. This is accomplished by removing the hub air volume from the heat conduction path.

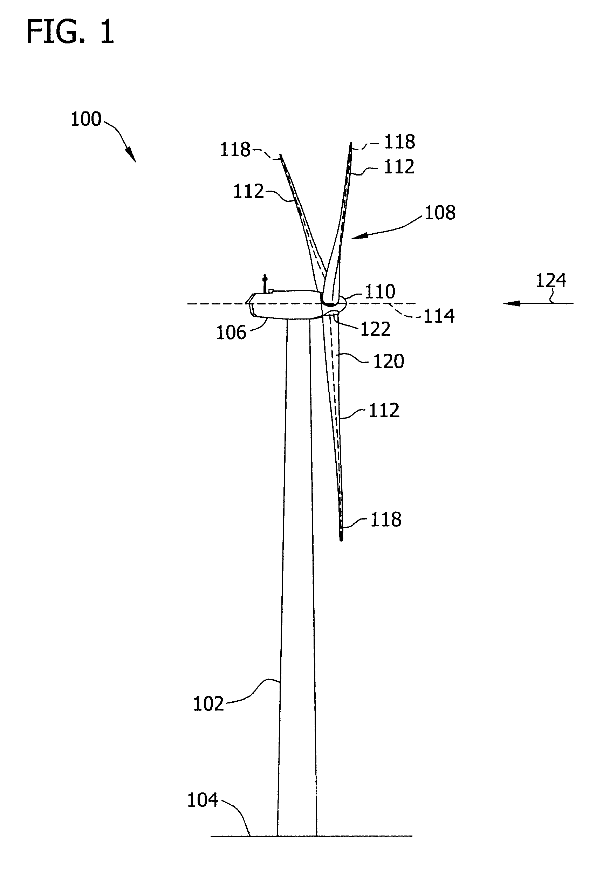

Referring to the drawings, FIG. 1 is a side elevation view of an exemplary wind turbine 100. In the exemplary embodiment, wind turbine 100 is a nearly horizontal-axis wind turbine. In another embodiment, wind turbine 100 may have an up-tilt angle (not shown) ranging from about 1° to about 15°. Alternatively, wind turbine 100 may be a vertical axis wind turbine. In the exemplary embodiment, wind turbine 100 includes a tower 102 that extends from a supporting surface 104, a nacelle 106 mounted on tower 102, and a rotor 108 that is coupled to nacelle 106. Rotor 108 includes a rotatable hub 110 and a plurality of rotor blades 112 coupled to and extending outward from hub 110. In the exemplary embodiment, rotor 108 has three rotor blades 112. In an alternative embodiment, rotor 108 includes more or less than three rotor blades 112. In the exemplary embodiment, tower 102 is fabricated from tubular steel such that a cavity (not shown in FIG. 1) is defined between supporting surface 104 and nacelle 106. In an alternate embodiment, tower 102 is a lattice tower. A height of tower 102 is selected based upon factors and conditions known in the art.

Blades 112 are spaced about rotor hub 110 to facilitate rotating rotor 108 to enable kinetic energy to be transferred from the wind into usable mechanical energy, and subsequently, electrical energy. Blades 112 are mated to hub 110 by coupling a blade root portion 120 to hub 110 at a plurality of load transfer regions 122. Load transfer regions 122 have a hub load transfer region and a blade load transfer region (both not shown in FIG. 1). Loads induced to blades 112 are transferred to hub 110 via load transfer regions 122.

In the exemplary embodiment, blades 112 have a length ranging from about 50 feet (ft) (about 15 meters (m)) to about 300 ft (about 91 m). Alternatively, blades 112 may have any length that enables wind turbine 100 to function as described herein. For example, other non-limiting examples of blade lengths include 10 meters or less, 20 meters, and 37 meters. As wind strikes blades 112 from a direction 124, rotor 108 is rotated about an axis of rotation 114. As blades 112 are rotated and subjected to centrifugal forces, blades 112 are also subjected to various bending moments and other operational stresses. As such, blades 112 may deflect and/or rotate from a neutral, or non-deflected, position to a deflected position and associated stresses, or loads, may be induced in blades 112. Moreover, a pitch angle of blades 112, i.e., the angle that determines a perspective of blades 112 with respect to the direction of the wind, may be changed by a pitch adjustment mechanism that facilitates increasing or decreasing blade 112 speed by adjusting the surface area of blades 112 exposed to the wind force vectors. Pitch axes 118 for blades 112 are illustrated. In the exemplary embodiment, each blade's pitch is controlled individually. Alternatively, the blade pitch for all blades may be controlled simultaneously.

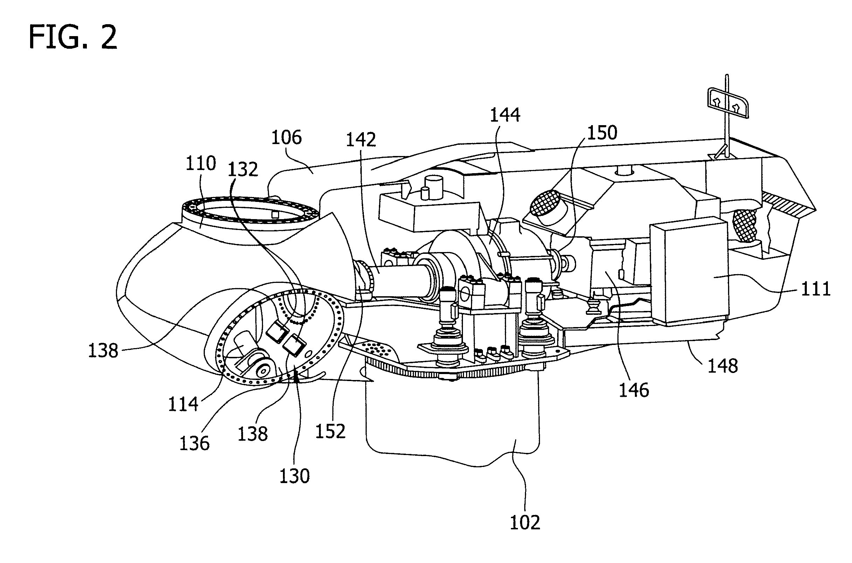

Referring to FIG. 2, various components are housed in nacelle 106 atop tower 102 of wind turbine 100. The height of tower 102 is selected based upon factors and conditions known in the art. In some configurations, one or more microcontrollers within a control panel 111 are used for overall system monitoring and control including speed regulation, high-speed shaft and yaw brake application, yaw and pump motor application and fault monitoring. Alternative distributed or centralized control architectures are used in some embodiments.

In the exemplary embodiment, a blade pitch motor control system 130 provides control signals to a variable blade pitch drive motor 132 to control the pitch of blades 112 (shown in FIG. 1) that drive hub 110 as a result of wind. Pitch motor control system 130 includes a plurality of components 134 that can produce excess heat during operation, for example transformers, thyristors, metal oxide substrate field effect transistors (MOSFET), transistors, silicone controlled rectifiers (SCR), and/or any other electrical components. Components 134 are mounted on inside surface 136 of hub 110 and are electrically insolated from hub 110. Any suitable method of mounting components 134 to hub 110 may be used, for example, using fasteners, including, but not limited to, screws, bolts, clips, and the like. Additionally, an adhesive material can be used to mount components 134 to hub 110.

Hub 110 acts as a heat sink for the heat generated by pitch control components 134. Hub 110 conducts the generated heat to the atmosphere outside hub 110. By conducting the excess heat to the atmosphere, the temperature of the internal air volume of hub 110 does not appreciably increase over time. In one embodiment, the temperature of the internal air volume of hub 110 is maintained below about 140°F, in another embodiment, below about 120°F, and in another embodiment, below about 110°F. An increased temperature situation inside hub 110 may result in an over temperature condition of the control system components which may require a shutdown of the turbine to allow the air volume of hub 110 to cool. In most situations, pitch control components 134 can operate without failure up to temperatures of about 140°F.

In the exemplary embodiment, components 134 are electrically insolated from hub 110 by positioning an electrically insolating material 138, for example, plastic materials that will provide electrical insulation while conducting heat from components 134 to hub 110. Suitable plastic materials include, but are not limited to, polyethylene, polypropylene, polystyrene, acrylonitrylstyrene, butadiene, polyethyleneterephthalate, polybutyleneterephthalate, polybutyleneterachlorate, and polyvinyl chloride, both plasticized and un-plasticized, polyarylene ethers, polycarbonates, polyestercarbonates, thermoplastic polyesters, polyetherimides, acrylonitrile-butylacrylate-styrene polymers, amorphous nylon, polyarylene ether ketone, polyphenylene sulfide, polyaryl sulfone, polyether sulfone, as well as alloys and blends of these materials with each other or other polymeric materials. In one exemplary embodiment MYLAR® polyester film is positioned between components 134 and inside surface 136 of hub 110.

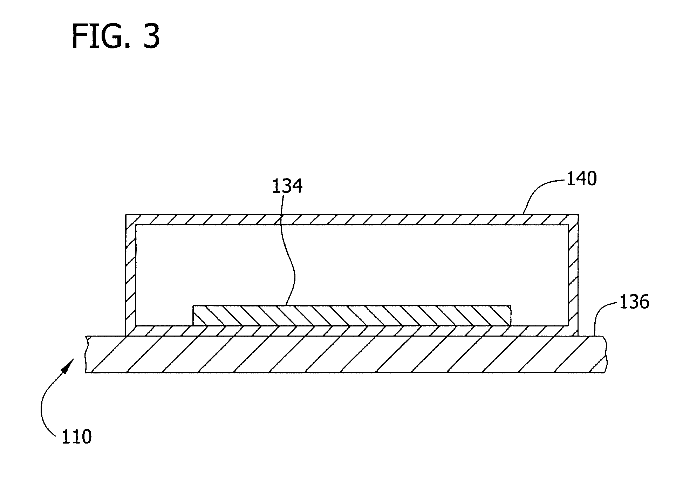

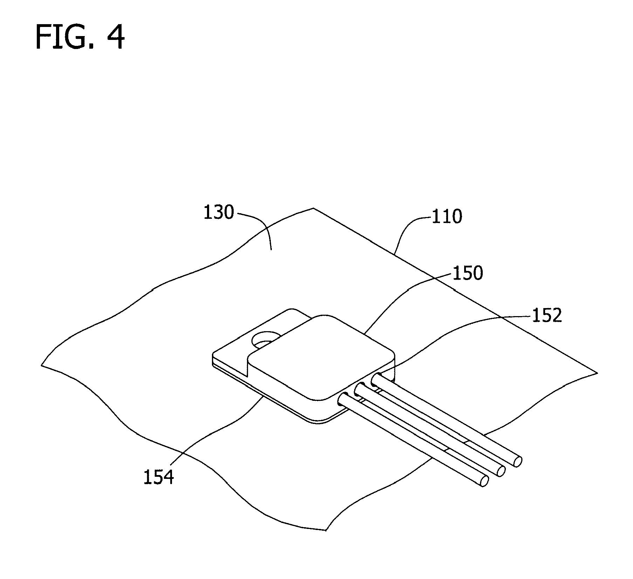

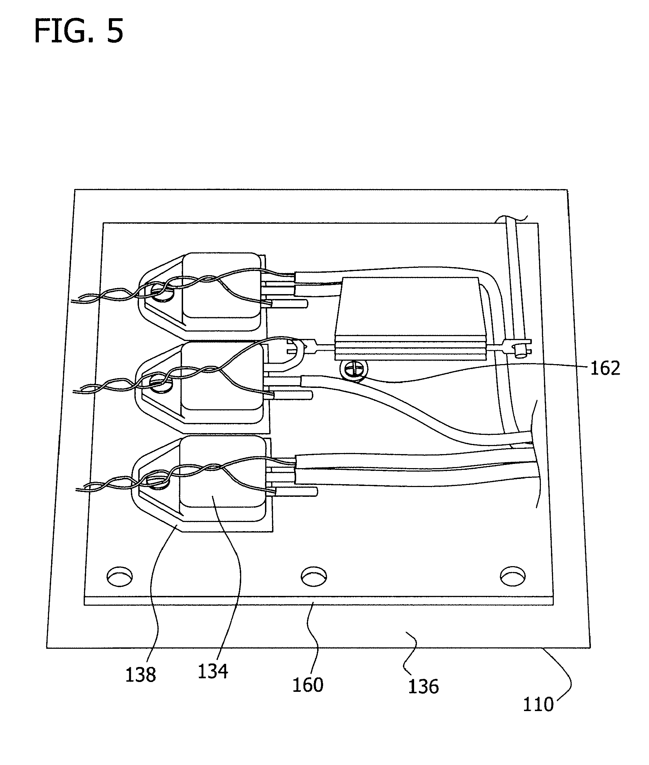

In an alternate embodiment, components 134 are electrically insolated from hub 110 by positioning components in an electrically insulating case 140 (shown in FIG. 3) which is mounted to inside surface 136 of hub 110 with fasteners and/or an adhesive. In another embodiment, shown in FIG. 4, a MOSFET is hermetically sealed in a case 150 having ceramic insulators 152 to electronically insulate wires 154. Case 150 is mounted on inside surface 132 of hub 110 by an adhesive 154. In another embodiment, shown in FIG. 5, components 134 are mounted on a metal plate 160 with electrically insulating material 138 positioned between components 134 and plate 160. Plate 160 is attached to inside surface 136 of hub 110 by any suitable method, for example fasteners 162 and/or adhesive material.

In the exemplary embodiment, hub 110 receives three blades 112, but other configurations can utilize any number of blades. In some embodiments, the pitches of blades 112 are individually controlled by blade pitch drive 132.

The drive train of the wind turbine includes a main rotor shaft 142 (also referred to as a "low speed shaft") connected to hub 110 and supported by a main bearing 152 and, at an opposite end of shaft 142, to a gear box 144. Gear box 144, in some configurations, utilizes a dual path geometry to drive an enclosed high speed shaft. The high speed shaft is used to drive generator 146, which is mounted on main frame 148. In some configurations, rotor torque is transmitted via coupling 150. Generator 146 may be of any suitable type, for example, a wound rotor induction generator.

As used herein, an element or step recited in the singular and proceeded with the word "a" or "an" should be understood as not excluding plural said elements or steps, unless such exclusion is explicitly recited. Furthermore, references to "one embodiment" of the present invention are not intended to be interpreted as excluding the existence of additional embodiments that also incorporate the recited features.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are now defined by the following numbered clauses:
1. A rotor for a wind turbine, said rotor comprising:
   a hub and at least one blade coupled to said hub;
   at least one electric pitch motor operatively coupled to said at least one blade; and
   a pitch motor control system operatively coupled to said at least one pitch motor, said pitch motor control system comprising a plurality of components that produce excess heat during operation, said plurality of components mounted to an inside surface of said hub.
2. A rotor in accordance with Clause 1, wherein said plurality of components that produce excess heat during operation mounted to said inside surface of said hub are electrically insolated from said inside surface of said hub.
3. A rotor in accordance with any preceding Clause, further comprising at least one electrically insolating material positioned between said inside surface of said hub and said plurality of components that produce excess heat during operation.
4. A rotor in accordance with any preceding Clause, wherein said plurality of components that produce excess heat during operation are mounted inside a electrically insulating case, said electrically insulated case mounted to said inside surface of said hub.
5. A rotor in accordance with any preceding Clause, wherein said plurality of components that produce excess heat during operation are mounted to a plate, said plate mounted to said inside surface of said hub, an electrically insolating material positioned between said plate and said plurality of components that produce excess heat during operation.
6. A rotor in accordance with any preceding Clause, wherein said plurality of components that produce excess heat during operation are mounted to said inside surface of said hub with an adhesive material.
7. A rotor in accordance with any preceding Clause, wherein said plurality of components that produce excess heat during operation are mounted to said inside surface of said hub with at least one fastener.
8. A wind turbine comprising:
   a wind rotor comprising a hub and at least one blade coupled to said hub;
   at least one electric pitch motor operatively coupled to said at least one blade; and
   a pitch motor control system operatively coupled to said at least one pitch motor, said pitch motor control system comprising a plurality of components that produce excess heat during operation, said plurality of components that produce excess heat during operation mounted to an inside surface of said hub.
9. A wind turbine in accordance with Clause 8, wherein said plurality of components that produce excess heat during operation mounted to said inside surface of said hub are electrically insolated from said inside surface of said hub.
10. A wind turbine in accordance with Clause 8 or 9, further comprising at least one electrically insulating material positioned between said inside surface of said hub and said plurality of components that produce excess heat during operation.
11. A wind turbine in accordance with any of Clauses 8 to 10, wherein said plurality of components that produce excess heat during operation are mounted inside a electrically insulating case, said electrically insulated case mounted to said inside surface of said hub.
12. A wind turbine in accordance with any of Clauses 8 to 11, wherein said plurality of components that produce excess heat during operation are mounted to a plate, said plate mounted to said inside surface of said hub, an electrically insolating material positioned between said plate and said plurality of components that produce excess heat during operation.
13. A wind turbine in accordance with any of Clauses 8 to 12, wherein said plurality of components that produce excess heat during operation are mounted to said inside surface of said hub with an adhesive material.
14. A wind turbine in accordance with any of Clauses 8 to 13, wherein said plurality of components that produce excess heat during operation are mounted to said inside surface of said hub with at least one fastener.
15. A method of cooling wind turbine components, said method comprising:
   providing a wind rotor comprising a hub and a plurality of blades coupled to the hub;
   providing at least one electric pitch motor operatively coupled to the plurality of blades, the at least one electric pitch motor comprising a pitch motor control system operatively coupled to the at least one pitch motor, the pitch motor control system comprising a plurality of components that produce excess heat during operation; and
   mounting the plurality of components to an inside surface of the hub so that the hub is a heat sink to remove excess heat from the plurality of components that produce excess heat during operation.
16. A method in accordance with Clause 15, wherein mounting the plurality of components that produce excess heat during operation to an inside surface of the hub comprises mounting the plurality of components that produce excess heat during operation to an inside surface of the hub so that the plurality of components are electrically insolated from the inside surface of the hub.
17. A method in accordance with Clauses 15 or 16, further comprising positioning at least one electrically insulating material between the inside surface of the hub and the plurality of components that produce excess heat during operation.
18. A method in accordance with any of Clauses 15 to 17, wherein mounting the plurality of components that produce excess heat during operation to an inside surface of the hub comprises mounting the plurality of components that produce excess heat during operation inside a electrically insulating case, and mounting the electrically insulated case to the inside surface of the hub.
19. A method in accordance with any of Clauses 15 to 18, wherein mounting the plurality of components that produce excess heat during operation, comprises:
   mounting the plurality of components that produce excess heat during operation to a plate;
   positioning an electrically insolating material between the plate and said plurality of components that produce excess heat during operation; and
   mounting the plate to the inside surface of the hub.
20. A method in accordance with any of Clauses 15 to 19, wherein mounting the plurality of components to an inside surface of the hub comprises mounting the plurality of components to an inside surface of the hub with at least one of an adhesive material and fasteners.

## Claims

1. A rotor (108) for a wind turbine (100), said rotor comprising:
a hub (110) and at least one blade (112) coupled to said hub;
at least one electric pitch motor operatively coupled to said at least one blade; and
a pitch motor control system (130) operatively coupled to said at least one pitch motor, said pitch motor control system comprising a plurality of components (134) that produce excess heat during operation, said plurality of components mounted to an inside surface of said hub.

2. A rotor (108) in accordance with Claim 1, wherein said plurality of components (134) that produce excess heat during operation mounted to said inside surface (136) of said hub (110) are electrically insolated from said inside surface of said hub.

3. A rotor (108) in accordance with Claim 2, further comprising at least one electrically insolating material (138) positioned between said inside surface (136) of said hub (110) and said plurality of components (134) that produce excess heat during operation.

4. A rotor (108) in accordance with Claim 2 or Claim 3, wherein said plurality of components (134) that produce excess heat during operation are mounted inside a electrically insulating case (140), said electrically insulated case mounted to said inside surface (136) of said hub (110).

5. A rotor (108) in accordance with Claim 2, or any claim dependent thereon, wherein said plurality of components (134) that produce excess heat during operation are mounted to a plate (160), said plate mounted to said inside surface (136) of said hub (110), an electrically insolating material (138) positioned between said plate and said plurality of components that produce excess heat during operation.

6. A rotor (108) in accordance with any preceding Claim, wherein said plurality of components (134) that produce excess heat during operation are mounted to said inside surface (136) of said hub (110) with an adhesive material (162).

7. A rotor (108) in accordance with any preceding Claim, wherein said plurality of components (134) that produce excess heat during operation are mounted to said inside surface (136) of said hub with at least one fastener (162).

8. A wind turbine (100) comprising:
a wind rotor (108) comprising a hub (110) and at least one blade (112) coupled to said hub;
at least one electric pitch motor operatively coupled to said at least one blade; and
a pitch motor control system (130) operatively coupled to said at least one pitch motor, said pitch motor control system comprising a plurality of components (134) that produce excess heat during operation, said plurality of components that produce excess heat during operation mounted to an inside surface (136) of said hub.

9. A wind turbine (100) in accordance with Claim 8, wherein said plurality of components (134) that produce excess heat during operation mounted to said inside surface (136) of said hub (110) are electrically insolated from said inside surface of said hub.

10. A wind turbine (100) in accordance with Claim 8 to Claim 9, further comprising at least one electrically insulating material (138) positioned between said inside surface (136) of said hub (110) and said plurality of components (134) that produce excess heat during operation.
